# EUROPÄISCHE PATENTANMELDUNG

(11) **EP 4 344 555 A1**
(43) Veröffentlichungstag der Anmeldung: **03.04.2024**
(21) Anmeldenummer: 22198043.6
(22) Anmeldetag: 27.09.2022
(51) Int. Cl.: A23L 15/00, A21D 2/18, A21D 10/00, A23L 29/212, A21D 2/24, A21D 2/16

(54) **EI-ERSATZSTOFF**

(71) Anmelder: Ingredo GmbH, 69126 Heidelberg (DE)
(72) Erfinder: EHRLER, Josef Immanuel, 69493 Hirschberg an der Bergstraße (DE)
(74) Vertreter: Müller-Boré & Partner Patentanwälte PartG mbB

(57) **Zusammenfassung**

Die vorliegende Erfindung betrifft einen Ei-Ersatzstoff, umfassend Mehl in einer Menge von 75 Massen-% oder mehr, bezogen auf die Gesamtmasse, des Ei-Ersatzstoffes, wobei das Mehl aus Getreidearten, ausgewählt aus der Gruppe, bestehend aus Weizen, Roggen, Triticale, Hafer und Gemischen daraus, erzeugt worden ist und einen durchschnittlichen Partikeldurchmesser von 90 µm oder weniger und ein spezifisches Gewicht von 0,70 kg L⁻¹ oder mehr aufweist, wobei das Mehl 70 bis 30 Massen-% Stärke und 30 bis 70 Massen-% Proteine, bezogen auf die Gesamtmasse des Mehls, umfasst; L-Cystein in einer Menge von 0,1 bis 3 Massen-%, bezogen auf die Gesamtmasse des Ei-Ersatzstoffes; und Öl in einer Menge von 1 Massen-% oder mehr und 15 Massen-% oder weniger, bezogen auf die Gesamtmasse des Ei-Ersatzstoffes.

## Beschreibung

Die vorliegende Erfindung betrifft einen Ei-Ersatzstoff.

Bei Backwaren ist das erzeugte Volumen durch eingebrachtes Gas ein wichtiges Merkmal. Das eingebrachte Gas verleiht den fertigen Backwaren nicht nur ihre oftmals typische Form und ist deshalb aus optischen Gründen bevorzugt, sondern wird zudem durch den Konsumenten als besonders schmackhaft wahrgenommen.

Klassisch wird zum Erzeugen von eingebrachtem Gas dem Teig ein Triebmittel, wie Backnatron oder Hefe, zugesetzt. Ein Nachteil der Triebmittel ist der erzeugte Beigeschmack, welcher durch den Konsumenten oftmals als bitter wahrgenommen wird. Deshalb sind klassische Triebmittel nur beschränkt einsetzbar. Des Weiteren haben Triebmittel, wie Backnatron oder Hefe, die negative Eigenschaft, dass diese eher große Gasblasen bilden, wie es von Broten hinlänglich bekannt ist. Darum sind diese Triebmittel für eine gleichmäßigere Gasverteilung, wie bei einem Biskuit (engl. sponge cake), welcher durch sehr feine und gleichmäßig verteilte Poren gekennzeichnet ist, ungeeignet.

Alternativ kann dem Teig ein Volumen verliehen werden, indem aufgeschlagene Eier dem Teig untergehoben werden. Beim Aufschlagen des Eies bzw. Eiweißes sind die zahlreichen Proteine des Eies maßgebend, durch welche das Ei ein Gashaltevermögen aufweist. So enthält das Eiweiß beispielsweise: Ovalbumin, Globuline, Lysozyme, Ovomucin, Ovomucoid, Avidin und Conalbumin; und das Eigelb beispielsweise: Vitellin, Vitellenin, Lecithin, Phosvitin und Livetine.

In der jüngeren Vergangenheit sind Eier zunehmend in einen negativen Fokus geraten, weil die Lebensmittelsicherheit von Eiern oftmals nicht gewährleistet werden konnte. Diesbezüglich können beispielsweise der Bayern-Ei-Skandal durch die Verunreinigung mit Salmonellen im Jahre 2015 und der Fibronil-Skandal im Jahre 2017 angeführt werden. Des Weiteren nimmt das Bewusstsein für das Tierwohl in der Bevölkerung zu, was zusammen mit gestiegenen Erzeugerkosten oftmals zu einem Vermeiden von Eiern in neuen Rezepten für Backwaren führt.

Auf Grunde dessen sind volumenerzeugende Ei-Ersatzstoffe in den Fokus der Lebensmittelindustrie gerückt, welche bereits einige kommerziell erhältliche Produkte hervorgebracht hat. Die erhältlichen Produkte zur Anwendung beim Kochen und Backen bestehen zumeist aus Eiweißpulver, Hydrokolloiden, Farbstoffen und Magermilchpulver. Ein Halbfabrikat für Backwaren, das Milchprotein und Milchzucker sowie das säureregulierende Mittel E 500 enthält, ist unter der Bezeichnung ÄGGIN erhältlich. Dieses birgt jedoch die Nachteile, dass es in einem für den Konsumenten aufwendigen Prozess mit Wasser angemischt werden muss und zudem deklarationspflichtige Bestandteile enthält.

Des Weiteren sind Halbfabrikate auf der Basis von Molkenprotein temperatursensitiv, was eine eingeschränkte Haltbarkeit von nur wenigen Tagen mit sich bringt. Ferner ist der Preis für Halbfabrikate auf der Basis von Molkenprotein vergleichsweise hoch.

Es besteht somit ein Bedarf nach neuen Konzepten, welche die vorstehend genannten Nachteile aufgreifen, und zwar einen Ei-Ersatzstoff für beispielsweise Backwaren bereitzustellen, welcher nicht auf tierischen Bestandteilen basiert und sich durch ein exzellentes Gashaltevermögen, Wasserbindungsvermögen und Stabilität auszeichnen soll.

Die vorstehend beschriebene Aufgabe wird durch die in den Ansprüchen gekennzeichneten Ausführungsformen der vorliegenden Erfindung gelöst.

Insbesondere wird erfindungsgemäß ein Ei-Ersatzstoff bereitgestellt, umfassend: Mehl in einer Menge bzw. Anteil von 75 Massen-% oder mehr, bezogen auf die Gesamtmasse, d.h. 100 Massen-%, des Ei-Ersatzstoffes,
wobei das Mehl aus Getreidearten, ausgewählt aus der Gruppe, bestehend aus Weizen, Roggen, Triticale, Hafer und Gemischen daraus, erzeugt worden ist und einen durchschnittlichen Partikeldurchmesser von 90 µm oder weniger und ein spezifisches Gewicht von 0,70 kg L⁻¹ oder mehr aufweist, wobei das Mehl 70 bis 30 Massen-% Stärke und 30 bis 70 Massen-% Proteine, bezogen auf die Gesamtmasse des Mehls, umfasst;
L-Cystein in einer Menge von 0,1 bis 3 Massen-%, bezogen auf die Gesamtmasse des Ei-Ersatzstoffes; und
Öl in einer Menge von 1 Massen-% oder mehr und 15 Massen-% oder weniger, bezogen auf die Gesamtmasse des Ei-Ersatzstoffes.

Der erfindungsgemäße Ei-Ersatzstoff umfasst Mehl, welches aus Getreidearten erzeugt worden ist. Diese bieten die Vorteile, dass sie gesund und biologisch kultivierbar sind. Dabei sind die Getreidearten aus der Gruppe, bestehend aus Weizen, Buchweizen, Roggen, Triticale und Hafer, ausgewählt. Diese können allein oder als Gemisch verwendet werden. Diese Getreidearten sind besonders vorteilhaft durch ihre natürliche Zusammensetzung an Stärke und Proteinen, durch welche ein Ei-Ersatzstoff mit ausgezeichneter Gashaltefähigkeit erhalten wird.

Gemäß der vorliegenden Erfindung umfasst der Ei-Ersatzstoff Mehl in einer Menge von 75 Massen-% oder mehr, bevorzugt von 80 Massen-% oder mehr, und weiter bevorzugt von 85 Massen-% oder mehr, bezogen auf die Gesamtmasse des Ei-Ersatzstoffes.

Liegt die Menge unterhalb der vorstehenden Untergrenze, weist eine entsprechende Lebensmittelzusammensetzung, die den erfindungsgemäßen Ei-Ersatzstoff enthält, ein unzureichendes Gashalte- und Wasserbindungsvermögen sowie eine mangelhafte Stabilität auf. Dabei kann die Lebensmittelzusammensetzung beispielsweise ein Teig für die Zubereitung von Backwaren, eine Eischnee-Alternative, eine Wurst- und Fleischware oder ein Milcherzeugnis sein.

In einer bevorzugten Ausführungsform umfasst der Ei-Ersatzstoff Mehl in einer Menge von 95 Massen-% oder weniger, bevorzugt von 92 Massen-% oder weniger und weiter bevorzugt von 90 Massen-% oder weniger, bezogen auf die Gesamtmasse des Ei-Ersatzstoffes. Liegt die Menge oberhalb der vorstehenden Obergrenze, weist die Lebensmittelzusammensetzung, die den erfindungsgemäßen Ei-Ersatzstoff enthält, eine geringere Geschmeidigkeit auf und Luft lässt sich schwieriger in die Lebensmittelzusammensetzung oder den erfindungsgemäßen Ei-Ersatzstoff einheben.

Bevorzugte Anteilsbereiche an Mehl in dem erfindungsgemäßen Ei-Ersatzstoff, bezogen auf die Gesamtmasse des Ei-Ersatzstoffes, sind 75 - 95 Massen-%; 75 - 90 Massen-%, 80 - 95 Massen-%, 80 - 90 Massen-%, 85 - 95 Massen-% bzw. 85 - 90 Massen-%.

Das Mehl im erfindungsgemäßen Ei-Ersatzstoff weist einen durchschnittlichen Partikeldurchmesser von 90 µm oder weniger, bevorzugt von 75 µm oder weniger und weiter bevorzugt von 50 µm oder weniger. Liegt der durchschnittliche Partikeldurchmesser oberhalb der vorstehenden Obergrenze, weist eine entsprechende Lebensmittelzusammensetzung, die den erfindungsgemäßen Ei-Ersatzstoff enthält, ein unzureichendes Gashalte- und Wasserbindungsvermögen, sowie eine mangelhafte Stabilität und eine erhöhte Schadstoffbelastung auf.

In einer bevorzugten Ausführungsform weist das Mehl im erfindungsgemäßen Ei-Ersatzstoff einen durchschnittlichen Partikeldurchmesser von 5 µm oder mehr, bevorzugt von 10 µm oder mehr und weiter bevorzugt von 20 µm oder mehr auf. Ein durchschnittlicher Partikeldurchmesser, der unterhalb der vorstehenden Untergrenze liegt, ist im Hinblick auf das Verfahren zur Herstellung, insbesondere aus ökonomischer Sicht, nicht bevorzugt.

Der durchschnittliche Partikeldurchmesser wird mittels Luftstrahlsiebung, beispielsweise durch die Luftstrahlsiebmaschine AS 200 JET (Microtrac MRB, Deutschland), bestimmt.

Das Mehl im erfindungsgemäßen Ei-Ersatzstoff weist ein spezifisches Gewicht von 0,70 kg L⁻¹ oder mehr, bevorzugt von 0,75 kg L⁻¹ oder mehr und weiter bevorzugt von 0,80 kg L⁻¹ oder mehr auf. Liegt das spezifische Gewicht unterhalb der vorstehenden Untergrenze, dann wurde das Mehl unzureichend intensivzerkleinert und enthält zu viele faserhaltige und verzweigte Substanzen. In der vorliegenden Erfindung ist eine Obergrenze des spezifischen Gewichts nicht besonders eingeschränkt, sie kann aber beispielsweise 0,95 kg L⁻¹ oder weniger betragen.

Das erfindungsgemäß eingesetzte Mehl ist weiterdahingehend gekennzeichnet, dass es 70 bis 30 Massen-% Stärke und 30 bis 70 Massen-% Proteine, bezogen auf die Gesamtmasse des Mehls, enthält.

Bevorzugt weist das Mehl 65 bis 35 Massen-% Stärke, bezogen auf die Gesamtmasse des Mehls, auf. Dadurch ist die Verkleisterungsfähigkeit verbessert, was die Gashaltefähigkeit einer entsprechenden Lebensmittelzusammensetzung, die den erfindungsgemäßen Ei-Ersatzstoff enthält, positiv beeinflusst. Vorzugsweise ist ein überwiegender Teil der Stärke beschädigt, was beispielsweise durch das nachstehend beschriebene Herstellungsverfahren erreicht werden kann. Ein überwiegender Teil kann beispielsweise mehr als 50 %, mehr als 70 % und mehr als 90 %, bezogen auf die Gesamtmenge an Stärke im Mehl, bedeuten.

Bevorzugt weist das Mehl 35 bis 65 Massen-% Proteine, bezogen auf die Gesamtmasse des Mehls, auf. Gemäß einer bevorzugten Ausführungsform macht Gluten 60 Massen-% oder mehr, weiter bevorzugt 70 Massen-% oder mehr und noch weiter bevorzugt 80 Massen-% oder mehr, der Gesamtmasse des im Mehl enthaltenen Proteins aus. Dadurch ist die Gashaltefähigkeit einer Lebensmittelzusammensetzung, die den erfindungsgemäßen Ei-Ersatzstoff enthält, verbessert. Bei dem Gluten handelt es sich in der Regel um ein, für den Fachmann bekanntes Protein-Gemisch, umfassend Prolamine und Gluteline.

Ferner liegt der Protein-Anteil im Mehl bevorzugt in einem Verhältnis zu L-Cystein von 40:1 bis 110:1 (Protein: L-Cystein), weiter bevorzugt von 50:1 bis 100:1, vor. Dadurch ist die Gashaltefähigkeit einer Lebensmittelzusammensetzung, die den erfindungsgemäßen Ei-Ersatzstoff enthält, verbessert. Ist der Anteil an Proteinen zu hoch, dann ist die Dehnungsfähigkeit der Lebensmittelzusammensetzung reduziert.

Der erfindungsgemäße Ei-Ersatzstoff umfasst weiter L-Cystein in einer Menge von 0,1 bis 3 Massen-%, bevorzugt von 0,2 bis 2 Massen-% und weiter bevorzugt von 0,3 bis 1,5 Massen-%, bezogen auf die Gesamtmasse des Ei-Ersatzstoffes. Dadurch wird die Gashaltefähigkeit einer entsprechenden Lebensmittelzusammensetzung, die den erfindungsgemäßen Ei-Ersatzstoff enthält, verbessert.

Der erfindungsgemäße Ei-Ersatzstoff umfasst weiter Öl. Gemäß einer bevorzugten Ausführungsform ist das Öl ein pflanzliches Speiseöl. Es können hier Hanföl, Rapsöl, Sonnenblumenöl, Sojaöl, Weizenkeimöl, Sesamöl, Olivenöl, Palmöl und Gemische davon angeführt werden. Durch das Öl weist eine Lebensmittelzusammensetzung, die den erfindungsgemäßen Ei-Ersatzstoff enthält, die verbesserte Fähigkeit auf, Luft einheben zu lassen, mit der Folge, dass die Zusammensetzung geschmeidiger wird. Dabei dient das verwendete Speiseöl als Träger für die Mehl enthaltene Stärke sowie gegebenenfalls enthaltene Emulgatoren.

Gemäß der vorliegenden Erfindung umfasst der Ei-Ersatzstoff Öl in einer Menge 1 Massen-% oder mehr und 15 Massen-% oder weniger, bevorzugt 1 Massen-% oder mehr und 12 Massen-% oder weniger und weiter bevorzugt 3 Massen-% oder mehr und 10 Massen-% oder weniger, bezogen auf die Gesamtmasse des Ei-Ersatzstoffes. Weist der Ei-Ersatzstoff eine Menge an Öl oberhalb der vorstehenden Obergrenze auf, dann wird eine Lebensmittelzusammensetzung, die den erfindungsgemäßen Ei-Ersatzstoff enthält, zu flüssig und kann das Gas nicht mehr halten. Weist der Ei-Ersatzstoff einen Ölanteil unterhalb der vorstehenden Untergrenze auf, dann ist die Fähigkeit, Luft in eine den erfindungsgemäßen Ei-Ersatzstoff enthaltende Lebensmittelzusammensetzung einzubringen, reduziert, so dass diese weniger geschmeidig wird.

Gemäß einer weiteren Ausführungsform kann der erfindungsgemäße Ei-Ersatzstoff weiter Fasern in einem Anteil von 0,01 Massen-% oder mehr und 5 Massen-% oder weniger, bezogen auf die Gesamtmasse des Ei-Ersatzstoffes, aufweisen. Bevorzugt weist der Ei-Ersatzstoff einen Fasern-Anteil von 0,1 Massen-% oder mehr und 5 Massen-% oder weniger und weiter bevorzugt von 1 Massen-% oder mehr und 3 Massen-% oder weniger auf. Hierbei können die Fasern aus der Gruppe, bestehend aus Haferfaser, Dinkelfaser, Weizenfaser, Reisfaser, Zitronenfaser, Apfelfaser, Gemüsefaser, Kartoffelfaser und Gemischen davon, ausgewählt sein. Durch die Fasern werden die rheologischen Eigenschaften einer Lebensmittelzusammensetzung, die den erfindungsgemäßen Ei-Ersatzstoff enthält, verbessert, sowie das Volumen und der Ballaststoffanteil erhöht.

Der erfindungsgemäße Ei-Ersatzstoff kann auch ein oder mehrere Verdickungsmittel in einem Anteil von 0,01 Massen-% oder mehr und 5 Massen-% oder weniger, bezogen auf die Gesamtmasse des Ei-Ersatzstoffes, aufweisen. Bevorzugt weist der Ei-Ersatzstoff einen Anteil des Verdickungsmittels von 0,1 Massen-% oder mehr und 5 Massen-% oder weniger und weiter bevorzugt von 1 Massen-% oder mehr und 3 Massen-% oder weniger auf. Hierbei kann es sich insbesondere um Schleimzucker (Galactose) handeln, welcher hinzugegeben wird oder als ein natürlicher Bestandteil in manchen Getreidearten vorkommt. Es kann aber auch ein Verdickungsmittel, ausgewählt aus der Gruppe, bestehend aus E 400 (Alginsäure), E 401 (Natriumalginat), E 402 (Kaliumalginat), E 403 (Ammoniumalginat), E 404 (Calciumalginat), E 405 (Propylenglycolalginat), E 406 (Agar-Agar), E 407 (Carrageen, Furcellaran), E 410 (Johannisbrotkernmehl), E 412 (Guarkernmehl), E 413 (Traganth), E 414 (Gummi arabicum), E 415 (Xanthan), E 416 (Karaya), E 417 (Tarakernmehl), E 418 (Gellan), E 440 (Pektin), E 440ii (Amidiertes Pektin), E 460 (Mikrokristalline Cellulose, Cellulosepulver), E 461 (Methylcellulose), E 462 (Ethylcellulose), E 463 (Hydroxypropylcellulose), E 464 (Hydroxypropylmethylcellulose), E 465 (Methylethylcellulose), E 466 (Carboxymethylcellulose, Natriumcarboxymethylcellulose), Flohsamenschalen und Gemischen davon, eingesetzt werden. Bevorzugt sind E 410 (Johannisbrotkernmehl), E 415 (Xanthan), E 440 (Pektin), E 461 (Methylcellulose) und Flohsamenschalen in dem erfindungsgemäßen Ei-Ersatzstoff enthalten. Das Verdickungsmittel unterstützt die vorteilhaften Effekte in Kombination mit dem Öl und kann die Fähigkeit verbessern, Luft einheben zu lassen, so dass eine Lebensmittelzusammensetzung, die den erfindungsgemäßen Ei-Ersatzstoff enthält, geschmeidiger wird. Des Weiteren erhöhen solche Verdickungsmittel die Viskosität des erfindungsgemäßen Ei-Ersatzstoffes.

Gemäß einer weiteren Ausführungsform kann der erfindungsgemäße Ei-Ersatzstoff weiter einen oder mehrere Emulgatoren in einen Anteil von 0,01 Massen-% oder mehr und 5 Massen-% oder weniger, bezogen auf die Gesamtmasse des Ei-Ersatzstoffes, aufweisen. Bevorzugt weist der Ei-Ersatzstoff einen Emulgator-Anteil von 0,1 Massen-% oder mehr und 5 Massen-% oder weniger und weiter bevorzugt von 1 Massen-% oder mehr und 3 Massen-% oder weniger auf. Hierbei kann der Emulgator aus der Gruppe, bestehend aus E 304 (Ascorbylpalmitat), E 322 (Lecithine), E 339 (Natriumphosphat), E 340 (Kaliumphosphat), E 405 (Propylenglycolalginat), E 470 (Salze der Speisefettsäuren), E 471 (Mono- und Diglyceride von Speisefettsäuren), E 472a (Essigsäureester von Mono- und Diglyceriden von Speisefettsäuren), E 472b (Milchsäureester von Mono- und Diglyceride von Speisefettsäuren), E 472c (Citronensäureester von Mono- und Diglyceriden von Speisefettsäuren), E 472d (Weinsäureester von Mono- und Diglyceride von Speisefettsäuren), E 472e (Mono- und Diacetylweinsäureester von Mono- und Diglyceride von Speisefettsäuren), E 472f (Gemischte Wein- und Essigsäureester von Mono- und Diglyceride von Speisefettsäuren), E 473 (Zuckerester von Speisefettsäuren), E 474 (Zuckerglyceride), E 475 (Polyglycerinester von Speisefettsäuren), E 476 (Polyglycerin-Polyricinoleat), E 477 (Propylenglycolester von Speisefettsäuren) und Gemischen davon ausgewählt sein. Bevorzugt sind E 322 (Lecithine) und E 471 (Mono- und Diglyceride von Speisefettsäuren) in dem erfindungsgemäßen Ei-Ersatzstoff enthalten. Durch den Emulgator wird die Struktur einer Lebensmittelzusammensetzung, die den erfindungsgemäßen Ei-Ersatzstoff enthält, verbessert und stabilisiert.

Weiter kann der erfindungsgemäße Ei-Ersatzstoff einen oder mehrere Bestandteile, ausgewählt aus der Gruppe, bestehend aus Speisesalzen, Mehlbehandlungsmitteln, Farbstoffen, Süßungsmitteln, Konservierungsstoffen, Antioxidationsmitteln, Trägerstoffe, Säuerungsmitteln, Säureregulatoren, Füllstoffen, Schmelzsalzen, Farbstabilisatoren und Vitaminen, umfassen. Hierbei sind eines oder mehrere von E 300 (Ascorbinsäure), E 301 (Natrium-L-Ascorbat), E 302 (Calcium-L-Ascorbat), E 481 (Natriumstearoyl-2-lactylat), E 482 (Calciumstearoyl-2-lactylat), E 483 (Stearyltartrat) und E 491 (Sorbitanmonostearat) bevorzugt.

Sämtliche in dem Ei-Ersatzstoffes enthaltenden Bestandteile, d.h. zwingend vorgesehene Bestandteile sowie optionale, machen immer 100 Massen-% des Ei-Ersatzstoffes aus, d.h. addieren sich zu 100 Massen-% auf.

Ein weiterer Aspekt der vorliegenden Erfindung betrifft ein Verfahren zur Herstellung eines solchen Ei-Ersatzstoffes, wie vorstehend beschrieben, umfassend die Schritte:
(I) Intensivzerkleinern eines Mehls, wobei die im Mehl enthaltene Stärke geschädigt wird,
   wobei das Mehl aus Getreidearten, ausgewählt aus der Gruppe, bestehend aus Weizen, Roggen, Triticale, Hafer, und Gemischen daraus, hergestellt wird;
(II) Luftstromsichten des Mehls aus Schritt (I), um ein Mehl mit einem durchschnittlichen Partikeldurchmesser von 90 µm oder weniger, einem spezifischen Gewicht von 0,70 kg L⁻¹ oder mehr zu erhalten, und wobei das Mehl 70 bis 30 Massen-% Stärke und 30 bis 70 Massen-% Proteine, bezogen auf die Gesamtmasse des Mehls, umfasst;
(III) Bereitstellen des Mehls aus Schritt (II) in einer Menge von 75 Massen-% oder mehr und Zugeben von L-Cystein in einer Menge von 0,1 bis 3 Massen-%, bezogen auf die Gesamtmasse des Ei-Ersatzstoffes; und
(IV) Aufbringen eines Öls auf das bereitgestellte Mehl aus Schritt (III) in einer Menge von 1 Massen-% oder mehr und 15 Massen-% oder weniger, bezogen auf die Gesamtmasse des Ei-Ersatzstoffes.

Sämtliche vorstehenden Ausführungen bezüglich des erfindungsgemäßen Ei-Ersatzstoffes treffen auch für das erfindungsgemäße Verfahren zur Herstellung des Ei-Ersatzstoffes zu.

Im Schritt (I) des erfindungsgemäßen Verfahrens wird ein Mehl intensivzerkleinert, um die im Mehl enthaltene Stärke (Polysaccharid aus α-D-Glucose-Einheiten) zu schädigen. Eine Schädigung der Stärke bedeutet, dass durch die Intensivzerkleinerung die Stärkeketten gespalten werden. Durch die Schädigung der Stärke wird die Fähigkeit zur Verkleisterung der Stärke durch eine erhöhte Wasseraufnahmefähigkeit verbessert. Dies führt zu einer verbesserten Lufteinschließung in einer Lebensmittelzusammensetzung, die den erfindungsgemäßen Ei-Ersatzstoff enthält.

Gemäß einer bevorzugten Ausführungsform wird die Intensivzerkleinerung des Mehls durch Mühlen, ausgewählt aus der Gruppe, bestehend aus Mahlplattenmühlen, Stiftmühlen, Prallmühlen und Doppelstrommühlen, durchgeführt. Mahlplattenmühlen und Prallmühlen sind im Hinblick auf eine optimale Schädigung der Stärke bevorzugt.

Im Schritt (II) des erfindungsgemäßen Verfahrens wird das im Schritt (I) intensivzerkleinerte Mehl luftstromgesichtet, um ein Mehl mit einem durchschnittlichen Partikeldurchmesser von 90 µm oder weniger und einem spezifischen Gewicht von 0,70 kg L⁻¹ zu erhalten. Bei der Luftstromsichtung werden Feststoffe, z.B. das Mehl im erfindungsgemäßen Ei-Ersatzstoff, in einem Luftstrom nach Kriterien wie Partikelgröße, Dichte, Trägheit, Schwebe- oder Schichtungsverhalten klassifiziert. Hierbei ist dem Fachmann das Verfahren zur Luftstromsichtung bekannt und kann beispielsweise mit der Sichtermühle CSM (Erich Netzsch GmbH & Co. Holding KG, Deutschland), bei welcher ein Sichter einer Prallmühle nachgeschaltet ist, durchgeführt werden.

Dadurch wird die Zusammensetzung der im Mehl enthaltenen Mengen an Stärke und Proteine verbessert, um ein Mehl, umfassend 70 bis 30 Massen-% Stärke und 30 bis 70 Massen-% Proteine, bezogen auf die Gesamtmasse des Mehls, zu erhalten. Des Weiteren können durch die Luftstromsichtung im Mehl enthaltene Schadstoffe verringert werden. Denkbare Schadstoffe, die verringert werden können, sind Schwermetalle, Toxine wie beispielweise Mykotoxin und Fusarientoxin, sowie Pestizide wie beispielsweise Ethylenoxid.

Im Schritt (IV) des erfindungsgemäßen Verfahrens wird auf das im Schritt (III) bereitgestellte Mehl, zu dem L-Cystein in einer Menge von 0,1 bis 3 Massen-%, bezogen auf die Gesamtmasse des Ei-Ersatzstoffes, zugegeben worden sind, ein Öl in einer Menge von 1 Massen-% oder mehr und 15 Massen-% oder weniger, bezogen auf die Gesamtmasse des Ei-Ersatzstoffes, aufgebracht.

Dabei wird das Öl über ein Verfahren, ausgewählt aus der Gruppe, bestehend aus Trommel-Coating, Wirbelschichtverfahren, beispielsweise durch einen Sprühturm, und Wurster-Verfahren, auf das bereitgestellte Mehl aufgebracht.

Bevorzugt wird das Öl über einen Sprühturm auf das bereitgestellte Mehl aufgebracht, wodurch das Mehl homogen mit dem Öl versetzt werden kann. Gegebenenfalls kann bzw. können, wie vorstehend bereits angemerkt, ein oder mehrere Emulgatoren und/oder Verdickungsmittel mit dem Öl oder vor bzw. nach dem Öl über den Sprühturm eines des vorstehend genannten Verfahren auf das Mehl aufgebracht werden.

In einer weiteren Ausführungsform des erfindungsgemäßen Verfahrens weist das Verfahren einen weiteren Schritt (V) auf, welcher zwischen den Schritten (III) und (IV) vorgesehen wird. Hierbei können dem bereitgestellten Mehl weitere Bestandteile des erfindungsgemäßen Ei-Ersatzstoffes, wie vorstehend beschrieben, beigefügt werden und gegebenenfalls vermischt werden. Der Prozess des Mischens ist hierbei nicht besonders einschränkend und es ist beispielsweise Rühren, Schütteln oder Drehen denkbar. Hierbei ist beispielsweise die Anwendung von einem Mischer, ausgewählt aus der Gruppe, bestehend aus Paddelmischer, Fliehkraftmischer, Zentrifugalmischer, Schneckenmischer, Rührwerkmischer, und Kantenmischer, geeignet.

In einer weiteren Ausführungsform des erfindungsgemäßen Verfahrens weist das Verfahren einen weiteren Schritt (VI) auf, welcher nach dem Schritt (IV) oder (V) vorgesehen wird. Hierbei wird der erhaltene Ei-Ersatzstoff getrocknet, um ein pulverförmiges Produkt zu erhalten, dessen Gesamtfeuchtigkeit 15% oder weniger in der Trockenmasse beträgt. Bevorzugt weist der Ei-Ersatzstoff eine Gesamtfeuchtigkeit von 10% oder weniger und weiter bevorzugt von 5% oder weniger in der Trockenmasse auf. Verfahren zur Trocknung und zur Bestimmung der Gesamtfeuchtigkeit sind dem Fachmann bekannt. Hierbei ist beispielsweise die Anwendung von einem Trockner, ausgewählt aus der Gruppe, bestehend aus Bandtrockner, Mahltrockner, Dünnschichttrockner, Vakuumtrockner, Dünnbetttrockner, und Dächertrockner, geeignet.

Ein weiterer Aspekt der vorliegenden Erfindung betrifft die Anwendung des erfindungsgemäßen Ei-Ersatzstoffes bei der Herstellung von Lebensmitteln. Durch einen hohen Anteil an Ballaststoffen und Proteinen verbessert der erfindungsgemäße Ei-Ersatzstoff den Nutri-Score in allen Lebensmitteln, denen er beigefügt wird. Zudem besteht der erfindungsgemäße Ei-Ersatzstoff hauptsächlich aus natürlichen und nachwachsenden Rohstoffen und lässt sich somit in den meisten Ländern aus regionalen Rohstoffen herstellen.

Üblicherweise wird eine Anwendung in Backwaren als Backmittel oder Mehlbehandlungsmittel vorgesehen. Dabei führt der erfindungsgemäße Ei-Ersatzstoff zu einer lockeren Struktur und einem erhöhten Volumen der Backwaren. Zudem kann der erfindungsgemäße Ei-Ersatzstoff als Alternative zu Eischnee verwendet werden.

Weiter ist die Anwendung in Fleisch und Wurstwaren möglich. Hierbei kann der erfindungsgemäße Ei-Ersatzstoff als Bindemittel eingesetzt werden. Des Weiteren kann der erfindungsgemäße Ei-Ersatzstoff die lufteinbringende Fähigkeit und die Formulierung von Fleisch und Wurstwaren verbessern. Diese vorteilhaften Effekte hat der erfindungsgemäße Ei-Ersatzstoff auch auf Milcherzeugnisse und Cremes.

Der erfindungsgemäße Ei-Ersatzstoff ist für die Verwendung in Fleisch- und Milchersatzstoffen insofern geeignet, als dass alle Bestandteile vegan herstellbar sind.

Die folgenden Rezepte dienen der Veranschaulichung für die Zubereitung eines Biskuitteigs mit dem erfindungsgemäßen Ei-Ersatzstoff, ohne jedoch hierauf beschränkt zu sein.

Zusammensetzung 1 des Ei-Ersatzstoffes, beispielsweise für einen Biskuitteig:
- Mehl (50 bis 55% Proteinen und 45 bis 50% Stärke)
- 1% L-Cystein
- 4% Haferfaser
- 12% Sojaöl (kann aber auch durch andere Öle ersetzt werden)

Diese Ei-Ersatzstoffzusammensetzung wird anschließend zu 5 bis 10% einem herkömmlichen Teig zugegeben.

Zusammensetzung 2 des Ei-Ersatzstoffes, beispielsweise für einen Biskuitteig:
- Mehl (35 bis 40% Proteinen und 60 bis 65% Stärke)
- 0,4% L-Cystein
- 1,5% Haferfaser
- 4% Sojaöl (kann aber auch durch andere Öle ersetzt werden)

Diese Ei-Ersatzstoffzusammensetzung wird anschließend zu 30 bis 55% einem herkömmlichen Teig zugegeben.

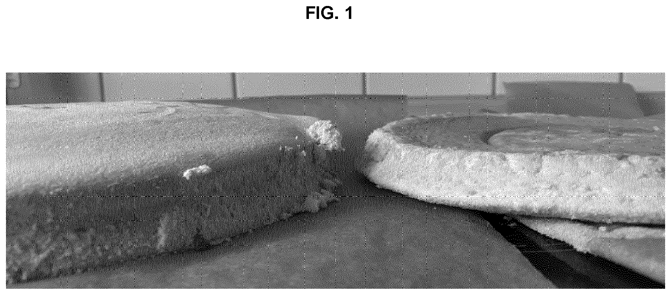

Fig. 1 zeigt links einen Biskuitteig umfassend den erfindungsgemäßen Ei-Ersatzstoff als Beispiel und rechts einen Biskuitteig, der mit Eiern zubereitet wurde als Vergleichsbeispiel.

### Beispiele

Die folgenden Beispiele dienen der Veranschaulichung der vorliegenden Erfindung, ohne jedoch hierauf beschränkt zu sein.

**Vergleichsbeispiel 1:**

| **Zutaten** | **Verarbeitung** |
|---|---|
| 200 g Mehl (T 405) | Die Eier werden mit einer Küchenmaschine für 8 Minuten aufgeschlagen. Die Restzutaten werden in einem Gefäß vermengt und der Eischnee untergehoben. Die Masse wird in eine geeignete Form gegeben (im Beispiel 26 cm Springform) und bei 180°C für 16 Minuten gebacken. |
| 200 g Zucker | |
| 4 TL Backpulver | |
| 1 Prise Salz | |
| 10 EL Fett (Butter/Öle) | |
| **6 Eier** | |

**Ausführungsbeispiel 1:**

| **Zutaten** | **Verarbeitung** |
|---|---|
| 200 g Mehl (T 405) | Alle Zutaten werden mit einer Küchenmaschine für 5 Minuten aufgeschlagen. Die Masse wird in eine geeignete Form gegeben (im Beispiel 26 cm Springform) und bei 180°C für 20 Minuten gebacken. |
| 200 g Zucker | |
| 4 TL Backpulver | |
| 1 Prise Salz | |
| 1 EL Fett (Butter/ Öle) | |
| **150 g Ei-Ersatzstoff** | |
| **250 g Wasser** | |

Die fertigen Backwaren aus dem Vergleichsbeispiel 1 und dem Ausführungsbeispiel 1 sind in der Figur 1 gezeigt. Hierbei ist anzumerken, dass die Rezeptur des Ausführungsbeispiels 1 in der Regel ein Volumen von 160% bis 200% des mit herkömmlichem Ei erzeugten Vergleichsbeispiels 1 aufweist.

Das Ausführungsbeispiel 1 weist eine weiß-beige Farbe auf und ist somit optisch heller als das Vergleichsbeispiel 1, welches mit herkömmlichem Ei gebacken wurde.

Darüber hinaus weist das Ausführungsbeispiel 1 mit dem erfindungsgemäßen Ei-Ersatzstoff einen Biskuit-typischen Geschmack auf, der ähnlich zu dem Vergleichsbeispiel 1 ist. Des Weiteren bildet der Biskuitteig aus dem Ausführungsbeispiel 1 bei der Abkühlung eine ebene Oberfläche aus und bleibt dennoch luftig und locker.

## Patentansprüche

1. Ei-Ersatzstoff, umfassend
Mehl in einer Menge von 75 Massen-% oder mehr, bezogen auf die Gesamtmasse, des Ei-Ersatzstoffes,
wobei das Mehl aus Getreidearten, ausgewählt aus der Gruppe, bestehend aus Weizen, Roggen, Triticale, Hafer und Gemischen daraus, erzeugt worden ist und einen durchschnittlichen Partikeldurchmesser von 90 µm oder weniger und ein spezifisches Gewicht von 0,70 kg L⁻¹ oder mehr aufweist, wobei das Mehl 70 bis 30 Massen-% Stärke und 30 bis 70 Massen-% Proteine, bezogen auf die Gesamtmasse des Mehls, umfasst;
L-Cystein in einer Menge von 0,1 bis 3 Massen-%, bezogen auf die Gesamtmasse des Ei-Ersatzstoffes; und
Öl in einer Menge von 1 Massen-% oder mehr und 15 Massen-% oder weniger, bezogen auf die Gesamtmasse des Ei-Ersatzstoffes.

2. Ei-Ersatzstoff nach Anspruch 1, wobei das Protein Gluten in einer Menge von 60 oder mehr Massen-%, bezogen auf die Gesamtmasse des Proteins, umfasst.

3. Ei-Ersatzstoff nach Anspruch 1 oder 2, weiter umfassend Fasern in einer Menge von 0,01 Massen-% oder mehr und 5 Massen-% oder weniger, bezogen auf die Gesamtmasse des Ei-Ersatzstoffes.

4. Ei-Ersatzstoff nach einem der Ansprüche 1 bis 3, weiter umfassend ein oder mehrere Verdickungsmittel in einer Menge von 0,01 Massen-% oder mehr und 5 Massen-% oder weniger, bezogen auf die Gesamtmasse des Ei-Ersatzstoffes.

5. Ei-Ersatzstoff nach einem der Ansprüche 1 bis 4, weiter umfassend ein oder mehrere Emulgatoren in einer Menge von 0,01 Massen-% oder mehr und 5 Massen-% oder weniger, bezogen auf die Gesamtmasse des Ei-Ersatzstoffes.

6. Ei-Ersatzstoff nach einem der Ansprüche 1 bis 5, weiter umfassend einen oder mehrere Bestandteile, ausgewählt aus der Gruppe, bestehend aus Speisesalzen, Mehlbehandlungsmitteln, Farbstoffen, Süßungsmitteln, Konservierungsstoffen, Antioxidationsmitteln, Trägerstoffe, Säuerungsmitteln, Säureregulatoren, Füllstoffen, Schmelzsalzen, Farbstabilisatoren und Vitaminen.

7. Ei-Ersatzstoff nach einem der Ansprüche 1 bis 6, wobei der Ei-Ersatzstoff pulverförmig ist.

8. Ei-Ersatzstoff nach einem der Ansprüche 1 bis 7, wobei eine Gesamtfeuchtigkeit des Ei-Ersatzstoffes 15 % oder weniger in der Trockenmasse beträgt.

9. Verfahren zur Herstellung eines Ei-Ersatzstoffes gemäß einem oder mehreren der vorhergehenden Ansprüche, umfassend die Schritte des
(I) Intensivzerkleinern eines Mehls, wobei die im Mehl enthaltene Stärke geschädigt wird,
wobei das Mehl aus Getreidearten, ausgewählt aus der Gruppe, bestehend aus Weizen, Roggen, Triticale, Hafer und Gemischen daraus, hergestellt wird;
(II) Luftstromsichten des Mehls aus Schritt (I), um ein Mehl mit einem durchschnittlichen Partikeldurchmesser von 90 µm oder weniger, einem spezifischen Gewicht von 0,70 kg L⁻¹ oder mehr zu erhalten, und wobei das Mehl 70 bis 30 Massen-% Stärke und 30 bis 70 Massen-% Proteine, bezogen auf die Gesamtmasse des Mehls, umfasst;
(III) Bereitstellen des Mehls aus Schritt (II) in einer Menge von 75 Massen-% oder mehr und Zugeben von L-Cystein in einer Menge von 0,1 bis 3 Massen-%, bezogen auf die Gesamtmasse des Ei-Ersatzstoffes; und
(IV) Aufbringen eines Öls auf das bereitgestellte Mehl aus Schritt (III) in einer Menge von 1 Massen-% oder mehr und 15 Massen-% oder weniger, bezogen auf die Gesamtmasse des Ei-Ersatzstoffes.

10. Verfahren zur Herstellung nach Anspruch 9, wobei das Mehl durch eine Mühle ausgewählt aus der Gruppe bestehend aus Mahlplattenmühle, Stiftmühle, Prallmühle und Doppelstrommühle intensivzerkleinert wird.

11. Verfahren zur Herstellung nach Anspruch 9 oder 10, wobei das Öl durch ein Sprühturmverfahren aufgebracht wird.
